# EUROPÄISCHE PATENTSCHRIFT

(11) **EP 2 580 146 B1**
(45) Veröffentlichungstag und Bekanntmachung des Hinweises auf die Patenterteilung: **28.01.2015**
(21) Anmeldenummer: 12721233.0
(22) Anmeldetag: 04.05.2012
(51) Int. Cl.: B65D 88/56, B65G 65/24

(54) **VORRICHTUNG ZUR KIPPBAREN AUFNAHME VON BEHÄLTERN**
DEVICE FOR TILTABLY RECEIVING CONTAINERS
DISPOSITIF POUR RECEVOIR DES RÉCIPIENTS DE MANIERE PIVOTABLE

(30) Priorität: 30.08.2011 DE 202011104948 U
(43) Veröffentlichungstag der Anmeldung: 17.04.2013
(73) Patentinhaber: Kaufman, Damijan, 58513 Lüdenscheid (DE)
(72) Erfinder: Kaufman, Damijan, 58513 Lüdenscheid (DE)
(74) Vertreter: Dörner, Kötter & Kollegen
(86) Internationale Anmeldenummer: PCT/EP2012/058271
(87) Internationale Veröffentlichungsnummer: WO 2013/029812

(56) Entgegenhaltungen:
- WO-A1-01/49598
- FR-A1- 2 859 719
- GB-A- 202 504
- GB-A- 2 296 701

## Beschreibung

Die Erfindung betrifft eine Vorrichtung zur kippbaren Aufnahme von Behältern mit einer Abgabeöffnung, umfassend einen Boden und einen Aufstellbereich, wobei der Aufstellbereich um eine Achse schwenkbar an dem Boden angeordnet ist und an seiner der Achse zugewandten Seite mit einer Abrutschsicherung versehen ist.

Die Vorrichtung der hier betrachteten Art ist zur Aufnahme von Behältern in Form von Fässern, Kübeln oder Tonnen vorgesehen, wobei die Behälter in der Regel im Bodenbereich eine Abgabeöffnung aufweisen. Die Abgabeöffnung ist mit einem Verschluss versehen, bei dem es sich beispielsweise um einen Hahn oder ein Ventil handeln kann. Bei den in den Behältern abgefüllten Medien kann es sich sowohl um flüssige Medien, beispielsweise Honig oder Bier, als auch um schüttfähige und feinkörnige Medien, beispielsweise Zucker, Mehl, Getreide oder dergleichen handeln. Vorrichtungen dieser Art sind unter anderem aus der FR 2 859 719 A1, GB 2 296 701 A1 und WO 01/49598 A1 bekannt. FR 2 859 719 A1 offenbart eine Vorrichtung gemäß dem Oberbegriff des Anspruchs 1.

Die Entnahme der in den Behältern befindlichen Medien ist üblicher Weise unproblematisch, soweit der Behälter ausreichend gefüllt ist. Je geringer jedoch die Füllmenge in dem Behälter ist, desto schlechter sind die Abgabeeigenschaften, da auf Grund der abnehmenden Füllmenge der Druck bei der Entnahme des Mediums abnimmt. Diesem wird in der Regel dadurch entgegengewirkt, dass der Behälter auf der der Abgabeöffnung abgewandten Seite angehoben wird, um so eine Entnahme des verbliebenen Mediums zu ermöglichen. Dies ist insbesondere bei großen bzw. schweren Behältern schwierig, sodass hierzu zwei Personen benötigt werden. Zudem werden die Behälter nur provisorisch in einer gekippten Position gehalten und zwar durch Unterlegen eines Gegenstandes, wodurch die Stabilität der gekippten Anordnung des Behälters gering ist.

Hier will die Erfindung Abhilfe schaffen. Der Erfindung liegt die Aufgabe zu Grunde, eine Vorrichtung zur kippbaren Aufnahme von Behältern mit einer Abgabeöffnung zu schaffen, die eine einfache und zugleich zuverlässige gekippte Anordnung des Behälters zur Entnahme des darin vorgesehenen Mediums auch bei einem geringen Füllstand ermöglicht. Gemäß der Erfindung wird diese Aufgabe durch die Merkmale des Patentanspruchs 1 gelöst.

Mit der Erfindung ist eine Vorrichtung zur kippbaren Aufnahme von Behältern mit einer Abgabeöffnung geschaffen, die eine einfache und zugleich zuverlässige gekippte Anordnung des Behälters ermöglicht. Durch den um die Achse schwenkbaren Aufstellbereich der Vorrichtung besteht die Möglichkeit, den jeweiligen Behälter in der Vorrichtung in eine gekippte Position zu bringen. Durch die zusätzlich vorgesehene Abrutschsicherung ist zudem gewährleistet, dass der Behälter auch in gekipptem Zustand zuverlässig und stabil in der Vorrichtung angeordnet ist. Gleichzeitig ermöglicht die Arretiervorrichtung die zuverlässige Anordnung der Elemente in dem gewünschten Winkel, ohne dass die Gefahr besteht, dass die Elemente unerwünscht in ihre Ausgangsposition zurückfahren. Die Ausbildung in Form einer Strebe erweist sich als außerordentlich einfach und gleichzeitig zuverlässig, da durch einfaches Verschieben der Strebe ein anderer Kippwinkel der Elemente erzielbar ist

In Ausgestaltung der Erfindung besteht der Boden aus mindestens zwei Teilen, zwischen denen der Aufstellbereich angeordnet ist. Diese Ausgestaltung ermöglicht eine sehr flache Ausbildung der erfindungsgemäßen Vorrichtung, was insbesondere die Aufbewahrung der Vorrichtung im Falle des Nichtgebrauchs vereinfacht.

In Weiterbildung der Erfindung besteht der Aufstellbereich aus mindestens zwei Elementen. Durch die Ausgestaltung mit zwei Elementen ist die Flexibilität bei der Handhabung der Vorrichtung erhöht. Zudem besteht im Falle einer beabstandeten Anordnung der Elemente die Möglichkeit, mit geringem Materialeinsatz eine große Aufstandsfläche bereitzustellen, was sowohl Vorteile hinsichtlich der Materialkosten als auch des Gewichts zur Folge hat.

Bevorzugt sind die Elemente des Aufstellbereichs durch eine Handhabe miteinander verbunden. Durch die Verbindung der Elemente des Aufstellbereichs durch die Handhabe besteht die Möglichkeit, alle Elemente gleichmäßig in die jeweils gewünschte gekippte Position zu bewegen. Hierdurch ist die Sicherheit beim Bedienen der Vorrichtung verbessert, weil dadurch ein Verrutschen oder seitliches Kippen des Behälters durch ungleichmäßiges Anheben der Elemente vermieden ist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die Darstellung einer Vorrichtung zur kippbaren Aufnahme von Behältern in der Draufsicht;
- Fig. 2: die Seitenansicht entlang der Linie II-II in Figur 1 der dargestellten Vorrichtung;
- Fig. 3: die Seitenansicht einer Standfläche.

Die als Ausführungsbeispiel gewählte Vorrichtung zur kippbaren Aufnahme von Behältern umfasst einen Boden 1 und einen Aufstellbereich 2. Der Boden 1 besteht im Ausführungsbeispiel aus drei Teilen 11, 12, 13. Der Aufstellbereich 2 besteht im Ausführungsbeispiel aus zwei Elementen 21, 22. Die Elemente 21 und 22 sind zwischen den Teilen 11 und 12 bzw. 12 und 13 des Bodens 1 angeordnet. In Abwandlung des Ausführungsbeispiels besteht auch die Möglichkeit, eine andere Anzahl an Teilen des Bodens bzw. Elementen des Aufstellbereichs vorzusehen. Insbesondere kommt hier die Verwendung lediglich eines Elementes für den Aufstellbereich 2 in Betracht, welches zwischen zwei Teilen des Bodens 1 angeordnet ist. Die Vorrichtung kann auf einem Sockel aufgestellt sein, um ein zu befüllendes Glas unterhalb der Vorrichtung abstellen zu können.

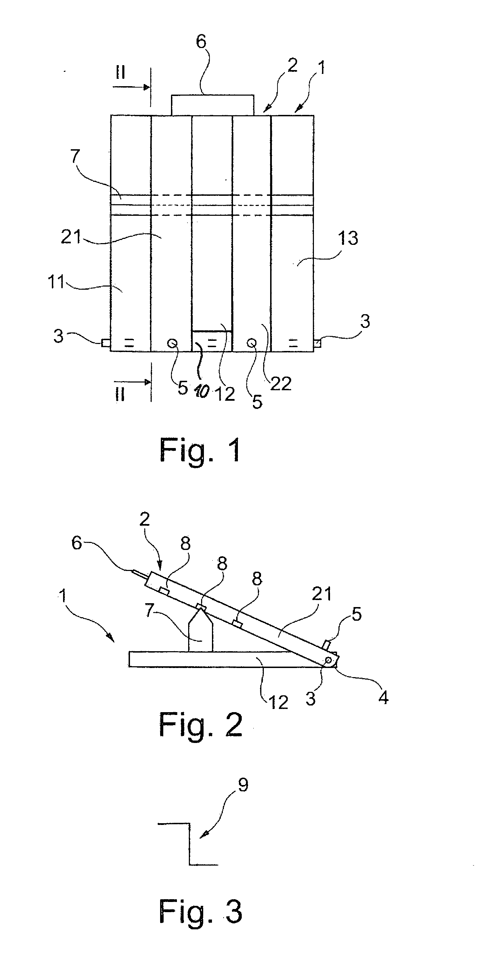

Der Aufstellbereich 2 ist um eine Achse 3 schwenkbar an dem Boden 1 angeordnet, wie dies insbesondere Figur 2 zu entnehmen ist. Die Achse 3 durchsetzt im Ausführungsbeispiel die Teile 11 bis 13 sowie die Elemente 21 und 22. Sie ist im Ausführungsbeispiel in einfacher Weise von einem durchgehenden Gestänge, einer Gewindestange oder einem Bolzen gebildet. In Abwandlung des Ausführungsbeispiels besteht auch die Möglichkeit, die Achse 3 mehrteilig auszubilden, so dass jeder Abschnitt der Achse 3 lediglich jeweils ein Teil 11, 12, 13 mit dem jeweils benachbarten Element 21, 22 verbindet. Die Abschnitte der Achse 3 können in diesem Fall in den Teilen 11, 12, 13 und den Elementen 21, 22 geclipst gehalten sein. Um die Schwenkung ohne Behinderung ausführen zu können, ist der Aufstellbereich 2 bzw. die Elemente 21 und 22 auf der der Achse 3 zugewandte Seite unten mit einer Rundung 4 versehen, die an allen Elementen des Aufstellbereichs 2 vorgesehen ist. Zudem ist der Boden 1, im Ausführungsbeispiel allein der zwischen den Elementen 21, 22 angeordnete Teil 12, auf seiner Oberseite im Bereich der Achse 3 mit einer Schräge 10 versehen sein, deren Winkel mindestens dem maximalen Neigungswinkel des Aufstellbereichs 2 entspricht. Auf diese Weise ist gewährleistet, dass das Behältnis behinderungsfrei kippbar ist, da einem Aufliegen des Behältnisrandes so vorgebeugt ist.

Auf der der Achse 3 zugewandten Seite weist der Aufstellbereich 2 eine Abrutschsicherung 5 auf. Die Abrutschsicherung 5 ist im Ausführungsbeispiel von zwei Stiften gebildet, die rechtwinklig von den Elementen 21 und 22 hervorstehen. Andere Arten von Abrutschsicherungen sind ebenfalls möglich, beispielsweise die Anbringung einer Leiste oder einer bogenabschnittförmigen Begrenzung. Auch können anstelle der Stifte Rasthaken vorgesehen sein, die in aufgestelltem Zustand an den umgebördelten Rand des Behältnisses, insbesondere eines Bierfasses, greift und somit eine zuverlässige Anordnung der Vorrichtung gewährleistet.

Die Elemente 21 und 22 des Aufstellbereichs 2 sind durch eine Handhabe 6 miteinander verbunden. Im Ausführungsbeispiel ist die Handhabe 6 von einem U-förmigen Bügel gebildet, der die Elemente 21 und 22 miteinander verbindet. In Abwandlung des Ausführungsbeispiels besteht auch die Möglichkeit, andere die Elemente des Aufstellbereichs sicher verbindende Elemente vorzusehen. Zudem besteht die Möglichkeit, einen Hebel an mindestens einem der Elemente 21, 22 vorzusehen, der die Grundfläche der Vorrichtung auf der Seite der Achse 3 überragt. Der Hebel kann gesteckt, geclipst oder geschraubt sein. Mit dem Hebel ist dann eine Verlängerung geschaffen, die ein Kippen der Elemente 21, 22 auf der Seite der Achse 3 - der Vorderseite - ermöglicht. Je nach Länge des Hebels ist zudem aufgrund der Hebelgesetze der Kraftaufwand beim Kippen der Elemente 21, 22 reduziert.

An der Vorrichtung ist eine Arretiereinrichtung 7 vorgesehen. Die Arretiereinrichtung 7 funktioniert im Ausführungsbeispiel nach dem Prinzip des Formschlusses. Hierzu ist eine Strebe vorgesehen. Die Strebe weist an ihrer dem Boden 1 abgewandten Seite eine Spitze auf. Die Arretiereinrichtung 7 korrespondiert mit Nuten 8, die auf der dem Boden zugewandten Seite des Aufstellbereichs 2 vorgesehen sind. Im Ausführungsbeispiel sind in den Elementen 21 und 22 jeweils drei zueinander beabstandete Nuten 8 angeordnet, die eine zur Längsmittellinie der Elemente 21 und 22 rechtwinklige Ausrichtung aufweisen. Die Nuten 8 sind folglich parallel zueinander angeordnet.

In Abwandlung des in den Figuren dargestellten Ausführungsbeispiels besteht auch die Möglichkeit, die Strebe der Arretiereinrichtung 7 auf dem Boden 1 zu fixieren, um eine Arretierung des Aufstellbereichs 2 zu ermöglichen. Hierzu ist es beispielsweise möglich, zueinander beabstandete parallele Nuten in dem Boden 1 vorzusehen, in denen die Strebe positionierbar ist. Die Nuten können auch im Querschnitt die Form eines Kreisabschnitts haben, sodass die Strebe einen runden Querschnitt aufweisen kann. Auch die Anordnung von schmalen Nuten nach Art einer Riffelung ist möglich, in die ein an der Strebe vorgesehene Steg eingreifen kann. Auch kann die Arretierung durch die Kombination von Dübeln erfolgen, wobei die Dübel vorzugsweise in Löchern im Boden 1 angeordnet sind. Die Dübel sind in die Löcher einsteckbar und ragen geringfügig aus dem Boden heraus. Sie dienen so der Strebe als Gegenhalt, der ein Verrutschen verhindert. Durch mehrere zueinander benachbarte Löcher lässt sich die Strebe unterschiedlich positionieren, woraus sich unterschiedliche Neigungswinkel ergeben. Alternativ kann auch auf der dem Boden 1 zugewandten Seite in der Strebe mindestens ein Dübel angeordnet sein, der in zueinander beabstandet angeordnete Löcher im Boden 1 einsteckbar ist. Auch hierdurch ist eine unterschiedliche Positionierung möglich.

Die Arretierung 7 kann zudem erfolgen, indem an den Enden der Strebe Ketten oder Bänder befestigbar sind, die mit einem Ende vorzugsweise seitlich am Boden 1 befestigt sind. Die Befestigung kann beispielsweise an den in Figur 1 dargestellten überstehenden Enden der Achse 3 erfolgen. Die Ketten oder Bänder legen dann in Abhängigkeit der vom Benutzer ausgewählten Länge den Neigungswinkel des Aufstellbereichs 2 fest. Dies kann auch mit Hilfe einer Lochstrebe bewirkt werden.

Alternativ kann die Arretiereinrichtung 7 auch nach dem Prinzip des Kraftschlusses funktionieren. Hierzu kann die Oberfläche des Bodens 1 beispielsweise einen hohen Reibkoeffizienten aufweisen oder mit einer reibungserhöhenden Beschichtung versehen sein. In diesem Fall hat auch die Strebe auf ihrer dem Boden 1 zugewandten Seite einen hohen Reibwert, so dass die Strebe durch die auf sie einwirkende Kraft und die Reibung in ihrer vorgesehenen Position verbleibt und das Behältnis unter dem gewünschten Winkel aufgestellt ist. Auch kann die Streben eine reibungserhöhende Beschichtung, beispielsweise aus Gummi, aufweisen, so dass die Strebe unter dem Einfluss der auf sie einwirkenden Kraft in ihrer gewünschten Position verbleibt.

Um ein Überschlagen der Vorrichtung zu vermeiden, kann an mindestens einem der Elemente 21, 22 eine Sicherung angeordnet sein. Diese kann zum einen aus einem auf der Vorderseite angeordneten Stift bestehen, der die Elemente 21, 22 überragt und so bei einem bestimmten Neigungswinkel einen Anschlag bildet. Zum anderen kann auch eine flexible Verbindung zwischen einem der Teile 11, 12 13 und einem der Elemente 21, 22, beispielsweise einer Kette, einem Band oder dergleichen bestehen. Die Verbindung ist vorzugsweise auf der Rückseite der Vorrichtung angeordnet. Der Neigungswinkel der Elemente 21, 22 ist dann durch die Länge der flexiblen Verbindung begrenzt.

Die Vorrichtung umfasst darüber hinaus eine Standfläche 9 beispielsweise für ein zu befüllendes Glas, um das aus dem jeweiligen Behälter abgefüllte Medium aufnehmen zu können, soweit sie nicht auf einem Sockel aufgestellt ist. Hierbei handelt es sich im Ausführungsbeispiel (vgl. Figur 3) um ein doppelt abgewinkeltes Blech, welches in einfacher Weise unter den Boden 1 der Vorrichtung klemmbar ist. Durch das Gewicht der Vorrichtung ist die Standfläche 9 sicher gehalten. Durch Anordnung der Standfläche 9 unter dem Teil 12 des Bodens 1 ist zudem gewährleistet, dass sich dieses und damit das jeweilige Glas unmittelbar unter der Abgabeöffnung des in der Vorrichtung angeordneten Behälters befindet.

Bei der Benutzung der erfindungsgemäßen Vorrichtung wird diese auf einer ebenen Fläche, beispielsweise einem Tisch, abgestellt. Sowohl die Teile 11 bis 13 des Bodens 1 als auch die Elemente 21 und 22 des Aufstellbereichs 2 liegen in dieser Position flach auf der jeweiligen Fläche auf. Es wird dann der jeweilige Behälter, bei dem es sich beispielsweise um eine Honigabfüllkübel oder ein Bierfass oder dergleichen handeln kann, auf dem Boden 1 bzw. dem Aufstellbereich 2 abgestellt. Die Aufstellung erfolgt derart, dass die Abgabeöffnung des Behälters zwischen den die Abrutschsicherung 5 bildenden Stiften ausgerichtet ist. Somit ragt die Abgabeöffnung über die Vorrichtung hinaus. Infolge dessen ist sie nach Anbringung der Standfläche 9 unmittelbar über dieser angeordnet.

In vollständig gefülltem Zustand des Behälters erfolgt in bekannter Weise die Abgabe des in dem Behälter befindlichen Mediums durch Betätigen der Abgabeöffnung, bspw. in Form eines Hahns oder Ventils. Ist der Behälter soweit geleert, dass sich ein geringer Druck beim Abfüllen des Mediums einstellt, wird der Aufstellbereich 2 auf der der Achse 3 abgewandten Seite angehoben, sodass sich zwischen dem Aufstellbereich 2 und dem Boden 1 ein Winkel einstellt (Figur 2). Das Anheben des Aufstellbereichs 2 erfolgt in einfacher Weise durch Benutzung der Handhabe 6, wodurch gewährleistet ist, dass die im Ausführungsbeispiel zwei Elemente 21 und 22 gleichmäßig angehoben werden. Ist ein Verlängerungshebel vorgesehen, kann das Anheben auch durch ein Drücken auf den Hebel erfolgen. Sodann wird die Arretiereinrichtung 7 zwischen die den Boden bildenden Teile 11 bis 13 und die den Aufstellbereich 2 bildenden Elemente 21 und 22 eingeschoben. Durch Herablassen des Aufstellbereichs 2 tritt die Spitze der Arretiereinrichtung 7 in die gewünschte Nut 8 ein, sodass der Aufstellbereich 2 in dem gewünschten Winkel zum Boden 1 arretiert ist. Der in der Vorrichtung angeordnete Behälter ist somit zur Horizontalen gekippt, wodurch sich ein besseres Abfüllverhalten einstellt. Durch die Abrutschsicherung 5 ist vermieden, dass der Behälter aus der Vorrichtung rutscht. Soweit sich bei einer weiteren Entnahme des Mediums aus dem Behälter erneut eine Verschlechterung des Abfülldrucks einstellt, kann der in der Vorrichtung angeordnete Behälter in einen größeren Kippwinkel gebracht werden. Hierzu wird erneut der Aufstellbereich 2 mit Hilfe der Handhabe 6 angehoben. Gleichzeitig wird die Arretiereinrichtung 7 in Richtung der Achse 3 bewegt, sodass die Spitze der Arretiereinrichtung 7 mit der benachbarten Nut 8 in Kontakt tritt. Durch Herablassen des Aufstellbereichs 2 ist die Vorrichtung in dieser Position arretiert. Dieses Vorgehen wiederholt sich, bis die äußerste Kippposition erreicht ist bzw. bis der jeweilige Behälter entleert ist.

## Patentansprüche

1. Vorrichtung zur kippbaren Aufnahme von Behältern mit einer Abgabeöffnung, umfassend einen Boden (1) und einen Aufstellbereich (2), wobei der Aufstellbereich (2) um eine Achse (3) schwenkbar an dem Boden (1) angeordnet ist und an seiner der Achse (3) zugewandten Seite mit einer Abrutschsicherung (5) versehen ist, wobei eine Arretiereinrichtung (7) vorgesehen ist, **dadurch gekennzeichnet, dass** die Arretiereinrichtung (7) von einer auf dem Boden (1) verschiebbaren oder auflegbaren Strebe gebildet ist, die entweder an dem Aufstellbereich oder am Boden arretierbar ist.

2. Vorrichtung nach Anspruch 1, **dadurch gekennzeichnet, dass** der Boden (1) aus mindestens zwei Teilen (11), (12), (13) besteht, zwischen denen der Aufstellbereich (2) angeordnet ist.

3. Vorrichtung nach Anspruch 1 oder 2, **dadurch gekennzeichnet, dass** der Aufstellbereich (2) aus mindestens zwei Elementen (21), (22) besteht.

4. Vorrichtung nach Anspruch 3, **dadurch gekennzeichnet, dass** die Elemente (21), (22) des Aufstellbereichs (2) durch eine Handhabe (6) miteinander verbunden sind.

5. Vorrichtung nach einem oder mehreren der vorgenannten Ansprüche, **dadurch gekennzeichnet, dass** die Arretiereinrichtung (7) nach dem Prinzip des Formschlusses funktioniert.

6. Vorrichtung nach einem oder mehreren der vorgenannten Ansprüche, **dadurch gekennzeichnet, dass** die Strebe mit Nuten (8) an dem Aufstellbereich (2) korrespondiert.

7. Vorrichtung nach einem oder mehreren der vorgenannten Ansprüche, **dadurch gekennzeichnet, dass** die Arretiereinrichtung (7) nach dem Prinzip des Kraftschlusses funktioniert.

8. Vorrichtung nach einem oder mehreren der vorgenannten Ansprüche, **dadurch gekennzeichnet, dass** der Boden (1) auf seiner Oberseite im Bereich der Achse (3) mit einer Schräge (10) versehen ist.

## Claims

1. A device for holding and tilting containers with a dispenser opening comprising: a base (1) and a positioning platform (2), in which the positioning platform (2) is mounted on a pivot spindle (3) and swivels on the base (1), and on its side facing the pivot spindle (3) is fitted with an anti-slip safety catch (5), where a clamp device (7) is accommodated, **characterized in that** the clamp device (7) is formed by a movable or placeable crossbar on the base (1) that is lockable either on the positioning platform or on the base.

2. A device according to claim 1, in which the base (1) comprises at least two parts (11), (12), (13) between which the positioning platform (2) is set up.

3. A device according to claim 1 or 2, in which the positioning platform (2) comprises at least two elements (21), (22).

4. A device according to claim 3, in which the elements (21), (22) of the positioning platform (2) are connected to each other by means of a handle (6).

5. A device according to one or more of the above-mentioned claims, in which the clamp device (7) functions according to the form-fit locking principle.

6. A device according to one or more of the above-mentioned claims, in which the handle corresponds with grooves (8) on the positioning platform (2).

7. A device according to one or more of the above-mentioned claims, in which the clamp device (7) functions according to the friction locking principle.

8. A device according to one or more of the above-mentioned claims, in which the base (1) on its upper side in the area of the pivot spindle (3) is arranged with a slant.

## Revendications

1. Dispositif destiné à recevoir de manière inclinable des récipients avec une ouverture de distribution, comprenant une base (1) et une zone support (2), dans lequel la zone support (2) est disposée au niveau de la base (1) de manière à pouvoir pivoter autour d'un axe (3) et est dotée d'un moyen anti-glissement (5) de son côté orienté vers l'axe (3), dans lequel un dispositif d'arrêt (7) est prévu, **caractérisé en ce que** le dispositif d'arrêt (7) est formé d'une entretoise qui peut être déplacée ou posée sur la base (1) et qui peut être bloquée soit au niveau de la zone support soit au niveau de la base.

2. Dispositif selon la revendication 1, **caractérisé en ce que** la base (1) se compose d'au moins deux parties (11), (12), (13) entre lesquelles est disposée la zone support (2).

3. Dispositif selon la revendication 1 ou 2, **caractérisé en ce que** la zone support (2) se compose d'au moins deux éléments (21), (22).

4. Dispositif selon la revendication 3, **caractérisé en ce que** les éléments (21), (22) de la zone support (2) sont reliés les uns aux autres par une poignée (6).

5. Dispositif selon l'une ou plusieurs des revendications précédentes, **caractérisé en ce que** le dispositif d'arrêt (7) fonctionne selon le principe de correspondance de forme.

6. Dispositif selon l'une ou plusieurs des revendications précédentes, **caractérisé en ce que** l'entretoise est en correspondance avec des rainures (8) au niveau de la zone support (2).

7. Dispositif selon l'une ou plusieurs des revendications précédentes, **caractérisé en ce que** le dispositif d'arrêt (7) fonctionne selon le principe de liaison de force.

8. Dispositif selon l'une ou plusieurs des revendications précédentes, **caractérisé en ce que** la base (1) est dotée d'un biseau (10) sur sa face supérieure au niveau de l'axe (3).
